(19) Europäisches Patentamt
European Patent Office
Office européen des brevets

(11) Publication number: **0 485 644 A1**

# (12) EUROPEAN PATENT APPLICATION

(21) Application number: **90121585.5**

(22) Date of filing: **12.11.90**

(51) Int. Cl.[5]: **C08L 81/02**, C08K 13/04, C08K 5/54, C08K 3/00, C08K 7/14, //(C08K13/04,5:54, 5:54,3:00,7:14)

(43) Date of publication of application:
**20.05.92 Bulletin 92/21**

(84) Designated Contracting States:
**AT BE CH DE ES FR GB IT LI NL**

(71) Applicant: **PHILLIPS PETROLEUM COMPANY**
**5th and Keeler**
**Bartlesville Oklahoma 74004(US)**

(72) Inventor: **Woods, Mark Weston**
**123 Fairview**
**Borger, TX 79007(US)**

(74) Representative: **Geissler, Bernhard, Dr.jur., Dipl.-Phys. et al**
**Patent- u. Rechtsanwälte Bardehle -Pagenberg-Dost-Altenburg -Frohwitter-Geissler & Partner Postfach 86 06 20 Galileiplatz 1**
**W-8000 München 80(DE)**

## (54) Poly(arylene sulfide) compositions with strengthened weldline.

(57) A glass-filled poly(arylene sulfide) composition having an improved weldline strength is achieved by the use of at least one organosilane selected from (I) the group consisting of aminosilane, mercaptosilane and polysulfide organosilane, and (II) at least one epoxysilane. A filler is also present. Tensile strength as measured on test bars molded with a double end-gated mold is a means to evaluate weldline strength.

EP 0 485 644 A1

## Field of the Invention

This invention relates to poly(arylene sulfide) compositions. In one aspect this invention relates to molded objects made from poly(arylene sulfide) compositions. In yet another aspect this invention relates to poly(arylene sulfide) compositions with improved weldline characteristics.

## BACKGROUND

Poly(arylene sulfide) compositions can be used in the manufacture of molded objects, particularly useful for a varity of mechanical applications. Arc-resistant compositions of high weldline strength are especially desired for electrical parts. Some molding operations, due to the necessary shape or form of the molded object, result in weldlines in the final molded article. A weldline, also known as a knitline, is the region in a molded part where two or more molten polymer fronts meet. Failures at weldlines are well-known. While both mold design and processing conditions can be adjusted to reduce weldlines and failures attributed thereto the problem of reducing failures associated with weldlines continues.

It is an object of this invention to provide novel poly(arylene sulfide) compositions. It is an object of my invention to provide for poly(arylene sulfide) compositions, especially polyphenylene sulfide compositions, with improved weldline strength. It is an object of this invention to provide poly(arylene sulfide) compositions which are arc-resistant and have weldline strength for electronic applications.

Other objects, advantages and aspects of this invention will become apparent to persons skilled in the art upon study of this disclosure and the appended claims.

## Brief Summary of the Invention

Compositions of this invention are prepared from poly(arylene sulfide), glass, filler, and at least two different organosilanes each selected from a specifically-defined group. One of the silanes (silane I) is selected from aminosilanes, mercaptosilanes, and polysulfide organosilanes. The other silane (silane II) is an epoxysilane.

In seeking solutions to weldline failures in glass-filled poly(arylene sulfide) resin compositions, I discovered an unexpectedly significant increase in weldline strength when the two defined different functional-types of organosilanes were used in conjunction with glass and a mineral filler to prepare poly-(arylene sulfide) molding compounds. The compositions can contain additionally, as desired, reinforcements, processing aids, pigments, additives, etc. The compositions can be used in the manufacture of molded parts for a variety of applications, including electronic applications due to the arc-resistance exhibited by certain of the compositions while having high weldline strength.

The two defined organosilanes of differing functionality impart to the glass-filled poly(arylene sulfide) composition an increase in the tensile strength in the presence of a weldline that makes the compositions well-suited for mechanical and electronic applications. Tensile strength as measured by ASTM D 638 on test bars injection molded with a double end-gated mold is a means to evaluate weldline strength. The invention, however, includes the compositions per se and is not limited to applications. This invention is further, and more completely, described in the disclosure and in the claims which follow.

## Detailed Description of the Invention

The compositions of this invention are a combination of glass-filled poly(arylene sulfide), filler, and organosilanes consisting of at least two differing organosilanes each selected from a specifically-defined group silane I and silane II as hereinafter defined.

The term organosilane designate silanes having four organic groups attached to a silicon atom. Frequently, three of the four organic groups are identical and are alkoxy, often being methoxy- or ethoxy-groups. The fourth group can contain a functional group, other than alkoxy, such as amino-, mercapto-, hydroxy-, epoxy-, or vinyl-, but can also be an alkyl or aryl group. Organosilanes are also referred to as coupling agents.

### Silane I

At least one organosilane, silane I, is selected from the group consisting of aminosilanes, mercaptosilanes, and polysulfide organosilanes. The polysulfide organosilane is represented by formula A given below:

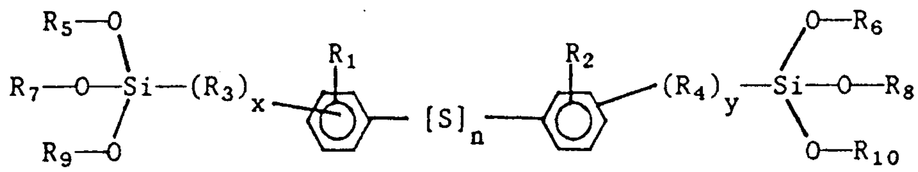

A

The number of sulfur atoms (S) linking the two aromatic groups is determined by the value of n which represents a positive integer of 1 to 30. A subgenus for use within the scope of this invention is represented by the formula A wherein n is a integer of 1 to 10. The preferred value for n is 1 to 5. Of course, any given commercial product of silane I formula A can be a mixture such that n overall would be an average non-integer.

Each of $R_1$ and $R_2$ is H or an alkyl group having 1 to 30 atoms. Each of $R_5$, $R_6$, $R_7$, $R_8$, $R_9$, and $R_{10}$ is an alkyl group having 1 to 30 carbon atoms. The alkyl groups associated with $R_1$, $R_2$, $R_5$, $R_6$, $R_7$, $R_8$, $R_9$, and $R_{10}$ can be linear or branched. Each of the letters x and y represents either 1 or 0. Each of $R_3$ and $R_4$ is an alkylene group having 1 to 30 carbon atoms. The alkylene group can be linear or branched.

A subgenus within for use within this invention is represented by formula A wherein each of $R_3$ and $R_4$ is an alkylene group having 1 to 10 carbon atoms. Preferably, each of $R_3$ and $R_4$ is an alkylene group having 1 to 5 carbon atoms. In an embodiment for use within the scope of this invention each of $R_3$ and $R_4$ is present and represents an ethylene group, $-CH_2CH_2-$.

$R_1$ and $R_3$ (or Si when x = 0) can be bonded to any available carbon atom of the corresponding aromatic ring. The position of $R_1$ with respect to the sulfur substituent can be ortho, meta, or para. The position of $R_3$ (or Si when x = 0) with respect to the sulfur substituent can be ortho, meta, or para. In a similar manner $R_2$ and $R_4$ (or Si when y = 0) can be bonded to any available carbon atom of the corresponding aromatic ring. The position of $R_2$ with respect to the sulfur substituent can be ortho, meta, or para. The position of $R_4$ (or Si when y = 0) with respect to the sulfur substituent can be ortho, metal or para.

The inventive composition can contain more than one silane within the scope of formula A. In one embodiment the glass-filled poly(arylene sulfide) composition contains two or more formula A polysulfide organofunctional silanes represented by

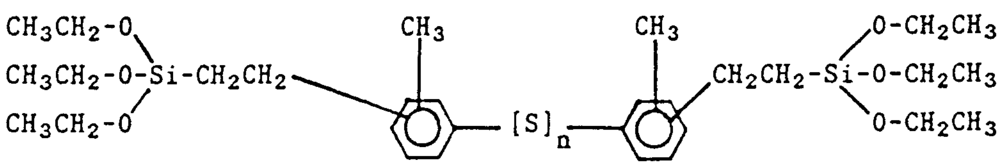

B

wherein the average value of n for the mixture is about 2 to about 4, presently preferably about 2.8.

Examples of polysulfide organosilanes for use in the compositions of my invention are described in U.S. patent 4,504,551. One suitable polysulfide organosilane is Union Carbide Corporation Organofunctional Polysulfide Silane Y-9194, a mixture of compounds within formula A wherein $R_1$ and $R_2$ are $-CH_3$; $R_3$ and $R_4$ are $-CH_2CH_2-$; $R_5$, $R_6$, $R_7$, $R_8$, $R_9$, and $R_{10}$ are $-CH_2-CH_3$; x = 1 and y = 1; and the average value of n is about 2.8. Other compounds within the scope of formula A can be made by modification of Silane Y-9194 or through separate synthesis routes.

The aminosilane of the silane I group can be, for example 3-aminopropylmethyldiethoxysilane, supplied as Dynasylan 1506 (Kay-Fries, Inc., Stoney Point, NY).

The mercaptosilane of the silane I group can be, for example, gammamercaptopropyltrimethoxysilane, supplied as Silane A-189 (Union Carbide Corporation, Danbury, CT).

Silane II

The second type of organosilane, silane II, is selected from the group consisting of at least one epoxysilane represented by formula C given below:

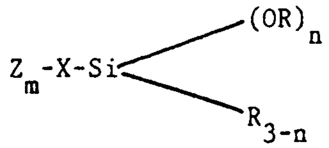

C

,

wherein Z is 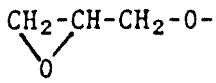 or 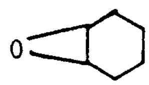 ;

X is a hydrocarbon radical having 1 to about 15 carbon atoms such as a linear or branched alkylene, arylene, or aralkylene radical; R is a hydrocarbon radical having 1 to about 8 carbon atoms, preferably an alkyl group having 1 to about 8 carbon atoms; m is an integer of at least 1, preferably 1 or 2; and n is an integer of 1 to 3. Preferred epoxysilanes can be selected from the group consisting of 3-glycidoxypropyltrimethoxysilane, beta-(3,4-epoxycyclohexyl)-ethyltrimethoxysilane, 3-glycidoxypropylmethyldiethoxysilane, and 2-glycidoxypropyltrimethoxysilane. A presently preferred epoxysilane suitable for use in the inventive compositions is available from Union Carbide Corporation under the designation UCARSIL TC-100 Organosilicon Chemical, 3-glycidoxypropyltrimethoxysilane, an epoxysilane.

## Poly(Arylene Sulfides)

The term poly(arylene sulfide) is intended to designate arylene sulfide resins and is abbreviated PAS. Uncured or partially-cured PAS resins whether homopolymer, copolymer, terpolymer, and the like, or a blend of such polymers, can be used in the practice of my invention. The uncured or partially-cured polymer is a polymer the molecular weight of which can be increased by supplying thereto sufficient energy, such as heat, or oxidizing atmosphere.

PAS resins useful in my compositions, but not limited to for example, are those described in U.S. patents such as 3,354,129, 3,919,177, 4,038,261, 4,415,729 and 4,656,231, with the proviso that suitable PAS resins for use in my invention must have a M.F. of less than about 800. The preferred PAS resin is polyphenylene sulfide resin, hereinafter referred to as PPS. The required PPS will have a melt flow of less than about 800 M.F., grams per 10 minutes as measured by ASTM D 1238, condition 317/5, to achieve the necessary improved mechanical strength, tensile strengtb, weldline strength, with the two defined silanes. The preferred PAS resin for use in my compositions is manufactured by Phillips Petroleum Company and marketed as RYTON® polyphenylene sulfide resins having a melt flow of about 10 to about 500 grams per 10 minutes as determined by the ASTM procedure referenced above. It is within the scope of the invention to employ copolymers of poly (arylene sulfide). Generally, although not necessarily, said copolymers will contain at least 90 mole percent of unsubstituted phenylene units.

## Glass Component

The glass component of the inventive compositions can be selected from the group consisting of glass particles, fiber glass, and hollow microspheric glass.

The preferred glass used in the present invention is glass in the form of fibers. While there are a variety of glass fiber reinforcing materials available, those specifically developed for thermoplastic reinforcement applications are preferred. If a finish or sizing is used on the glass fibers, it should be one that is compatible with the other components of the composition such as the at least two organosilanes. Glass fibers that have been used in an inventive composition with good results are those produced by Owens-Corning Corporation and marketed as K-filament Fiberglas type 497 glass.

## Fillers

Fillers are, included in my compositions. Fillers are used to improve the dimensional stability, thermal conductivity, and mechanical strength of compositions. Suitable fillers include, for example, talc, silica, clay, alumina, titania, calcium sulfate, calcium carbonate, mica, and so on, and mixtures thereof. A particularly suitable filler is a calcium sulfate. The fillers can be in the form of, for example, powder, grain, or fiber.

In selecting a filler for electrical compositions the following factors should be considered:

(1) the electrical conductivity of the filler (the lower the better);

(2) the thermal stability of the filler at encapsulation temperatures; and
(3) the level of ionic impurities in the filler. The preferred fillers are calcium sulfate, silica, and titania; even more preferred is calcium sulfate.

## Compositions

The compositions of my invention can range widely as to relative proportions of the five primary components: poly(arylene sulfide), glass, filler, and the organosilanes consisting of silane I and silane II, so long as effective amounts of each are present.

In my compositions, containing organosilanes consisting of silane I and silane II, the amount of the defined at least two organosilanes to be employed is defined in functional language as the amount to impart improved weldline tensile strength to the composition. Improved weldline tensile strength means that a first composition having the defined differing two organosilanes has a higher value of tensile strength, as measured on a test specimen having been molded under conditions which gives a weldline, than a second composition which does not have the at least two organosilanes but which is otherwise identical in type to the first composition. Weldline tensile strength is measured in accordance with the procedure used in the examples of this specification.

To guide one skilled in the art and for the convenience of one skilled in the art, suggested broad, medium, and narrow ranges of the five essential ingredients of my inventive compositions are listed in Table I. The percentages are based on the weight of the total composition, and, of course, would be selected to add up to 100 for any given composition.

TABLE I

| Suggested Compositional Ranges of Components, Weight Percent | | | |
|---|---|---|---|
| Component | Broad | Medium | Narrow |
| PAS | 25-60 | 30-50 | 35-45 |
| Glass | 5-60 | 20-50 | 35-45 |
| Filler | 5-50 | 10-40 | 15-25 |
| Silane I | 0.25-3 | 0.25-1.25 | 0.25-0.75 |
| Silane II | 0.25-4 | 0.25-2 | 0.5-1 |

In addition to the five essential components described above, the innovative compositions also can contain optional components such as mold corrosion inhibitors, pigments, processing aids, and the like. The optional components, when present, can be incorporated into the compositions in amounts effective for their intended effects without substantial deliteriously modifying the desired properties of the total compositions. The suggested amounts of such components usually or typically incorporated are listed in Table II. The percentages are based on the weight percent in my total compositions.

TABLE II

| Suggested Compositional Ranges of Optional Components | | |
|---|---|---|
| | Broad | Narrow |
| Corrosion Inhibitor | 0.5-3 | 0.5-1.5 |
| Processing Aid | 0.1-2 | 0.1-1 |
| Pigment | 0.5-2.5 | 0.5-1.5 |

Since one of the primary uses of my inventive compositions is as a molding compound, a mold corrosion inhibitor such as, for example, hydrotalcite or lithium carbonate can be used without adverse affecting the mechanical properties of the inventive compositions. Hydrotalcite, such as DHT-4A Kyowa Chemical Industry Company, Ltd., Osaka, Japan, presently is preferred. Further, it is frequently desirable to incorporate a processing aid in the inventive composition. For example, polyethylene resins are often used as a processing aid in PAS compositions without adversely affecting mechanical properties. A pigment such as carbon black, such as ASTM Grade N-110 supplied by Huber Corporation, can be used in the inventive

compositions to achieve products having uniform color without adversely affecting mechanical properties. Channel blacks, such as Special Black-4 (SB-4), regular color channel black, Degussa, West Germany, also can be used.

The compositions of my invention can be made in accordance with any method wherein the essential five components PAS glass, filler, the two differing silanes (silane I and silane II), and other components (if any) are combined to form a mixture. Many suitable methods are wellknown to those skilled in the art. By way of example, the components of the compositions can be mixed together at room temperature in a rotating drum blender or in an intensive mixer such as a Henschel mixer to form a homogeneous mixture of components. Alternatively, the silanes (silane I and silane II) can be pre-mixed with the glass and/or the filler before addition of the PAS and other components, if any, are combined to form a homogeneous mixture. The homogeneous mixture of components can be extrusion compounded at a temperature above the melting point of the PAS to produce a uniform composition. The extrudate can be in the form of strand, sheet, or shaped form. Especially convenient for injection molding and encapsulation are chopped strand compositions.

## Examples

The following examples are presented to facilitate disclosure of this invention to one skilled in the art and should not be interpreted to unduly limit its scope. Species and relative proportions employed are intended to be illustrative and not limitive of the reasonable scope of my invention.

## EXAMPLE I

In this example six polyphenylene sulfide (PAS) compositions (identified as Runs 1-6) were compared. Composition Run 1 was prepared without any organosilane, compositions Runs 4 and 5 were prepared using one organosilane, and compositions Runs 2, 3, and 6 were prepared according to my invention using one organosilane selected from each of the groups silane I (Y-9194) and silane II (TC-100).

Each composition was prepared as follows: The specified components were charged to a Model 35-JSS Henschel mixer manufactured by Prodex Corp. (Fords, NJ) and mixed until homogenized. The mixture was passed through a Crown Products Inc. (Addison, IL) Custom Made Single Screw extruder with an L/D of 40/1 at a stock temperature of 600-650 °F and pelletized. The pelletized product was injection molded using an 80 ton Kawaguchi molding machine (625-650 °F stock temperature, 8000 psi, and 300 °F mold temperature) into a double end-gated mold to yield type IV, $4\frac{1}{2}$ inches, ASTM D 647, test specimens for tensile strength measurements. Test specimens for flexural and tensile properties and impact resistance (Izod) also were prepared in single-gated molds to yield test specimens conforming to ASTM D 790, D 638 and D 256, respectively. Tensile strength was measured on test specimens which had been annealed at 400 °F for two hours. Melt flow rate, MFR, was measured in accordance with ASTM D 1238, condition 317/5.

Flat test specimens (2.5 inch x 2.5 x 0.125 inch) were used to determine the insulation resistance of each composition. The test specimens were prepared by injection molding with an 80-ton Kawaguchi molding machine (625-650 °F stock temperature, 8000 psi and 300 °F mold temperature).

The flat test specimens were used to determine the electrical insulation resistance of the composition. Three holes, each 0.25 inches in diameter and located in a triangular pattern about 1.25 inches apart, were drilled in the disc. A metal bolt (with nut and washer) was attached through each hole. A single tinned copper wire was attached to each bolt. The wired specimens were conditioned for 48 hours in a 95 ± 1% relative humidity chamber at 90 °C. After the 48 hours exposure the resistance between each pair of leads at a potential of 500 volts AC was measured using a GenRad Megohmeter (type 1864) having the capability to measure resistance up to 2 x $10^{14}$ ohm. For each pair of leads two measurements were made, i.e. a first measurement, and a second measurement about 1 minute after the first. After all three pairs of leads had been measured the average value of the first measurements was calculated and the average value of the second measurements was calculated.

The components, precentage by weight, of each composition are given below in Table III along with the mechanical properties of the compositions.

TABLE III

WELDLINE STRENGTH OF GLASS-FILLED PPS COMPOSITIONS

| Run | 1 | 2 | 3 | 4 | 5 | 6 |
|---|---|---|---|---|---|---|
| **COMPOSITION** | | | | | | |
| Component, Weight % | | | | | | |
| PPS [(a)] | 38 | 38 | 38 | 38 | 38 | 38 |
| Glass[(b)] | 40 | 40 | 40 | 40 | 40 | 40 |
| $CaSO_4$[(c)] | 20.75 | 18.45 | 18.75 | 19.25 | 18.75 | 18.45 |
| DHT-4A[(d)] | 1.0 | 1.0 | 1.0 | 1.0 | 1.0 | 1.0 |
| HDPE[(e)] | 0.25 | 0.25 | 0.25 | 0.25 | 0.25 | 0.25 |
| N110, Carbon Black[(f)] | -- | 1.0 | -- | 1.0 | 1.0 | 1.0 |
| SB-4, Carbon Black[(g)] | -- | -- | 0.7 | -- | -- | -- |
| Y9194 [(h)] (Silane I) | -- | 0.5 | 0.5 | 0.5 | -- | 0.5 |
| TC-100[(i)] (Silane II) | -- | 0.8 | 0.8 | -- | 0.8 | 0.8 |
| **MECHANICAL PROPERTIES** | | | | | | |
| Tensile Strength, PSI | | | | | | |
| Weldline | 8050 | 10150 | 9850 | 7850 | 8200 | 10100 |
| Annealed | 16050 | 18650 | 19100 | 17600 | 18900 | 16600 |
| As Molded | 15200 | 19450 | 18250 | 17550 | 18600 | 17500 |
| Elongation, % (as molded) | 0.69 | 0.89 | 0.84 | 0.81 | 0.98 | 0.76 |
| Flexural Modulus, PSI | 2211600 | 2367800 | 2369150 | 2323900 | 228600 | 2308100 |
| Flexural Strength, PSI | 21700 | 29450 | 29450 | 25650 | 30100 | 25800 |
| Impact Resistance, ft-lb/in$^2$ | | | | | | |
| Notched Izod | 0.88 | 1.0 | 1.0 | 1.0 | 0.99 | 1.0 |
| Unnotched Izod | 3.4 | 4.2 | 3.6 | 3.8 | 5.3 | 3.6 |
| Insulation Resistance, ohms | $1.4 \times 10^{11}$ | $8.7 \times 10^{12}$ | $4.1 \times 10^{13}$ | $2.1 \times 10^{13}$ | $4.4 \times 10^{11}$ | $7.4 \times 10^{12}$ |
| Melt Flow Rate, g/10 min | 39.7 | 22.4 | 25.3 | 47.9 | 32.1 | 38.8 |

(a) Poly(phenylene sulfide), Ryton® Phillips Petroleum Comapny, a high molecular weight substantially linear PPS of about 150 M.F.

(b) Glass fibers, 13 - 16 microns diameter, OC-497 Owens - Corning Fiberglas K-filament, in Runs 1-5 inclusive. Run 6 employed a similar glass fiber PPG 3090 from another source.

(c) Calcium sulfate, CA5 U.S. Gypsum Corporation

(d) Hydrotalcite, mold corrosion inhibitor, Kyowa Chemical Industry Company Ltd., Osaka, Japan.

(e) High density polyethylene Marlex® TR161 HDPE, density 0.962, melt index 30, Phillips Petroleum Company.

(f) Carbon black, pigment, ASTM grade N-110, Huber Corporation.

(g) Carbon black, pigment, channel black. Special Black-4. SB-4 Degussa, West Germany.

(h) Union Carbide, Y-9194; a silane I type, proprietary formulation of polysulfide organosilane; see U.S. Patent 4,504,551

(i) Union Carbide, TC-100; a silane II type, high purity epoxysilane gamma-Glycidoxypropyltrimethoxysilane, $CH_2\text{-}CH\text{-}CH_2\text{-}O\text{-}CH_2\text{-}CH_2\text{-}CH_2\text{-}Si\text{-}(OCH_3)_3$

The data demonstrate that my compositions in which the organosilane component consisted of the presence of an organosilane from each of the silane I and silane II groups in the glass-filled PPS compositions, Runs 2, 4, and 6, exhibied significant improvement in the weldline tensile strength, as compared to compositions containing only one organosilane Runs 3 and 5, or no organosilane Run 1. The presence of only a silane I or a silane II type of organosilane tends to improve the tensile strength of

specimens without a weldline both as molded and annealed. Clearly, the combination consisting of an organosilane from each of silane I and silane II groups present in the same composition significantly improves the weldline tensile strength. The improvement was also observed in the presence of a different glass, PPG 3090, Run 6 vs Run 2.

EXAMPLE II

The data of Runs 7-18 demonstrate the effect of filler type on the mechanical properties of glass-filled PPS compositions.

The compositions were prepared as described in Example I from the following ingredients in terms of weight percent based on the weight of the total composition:

(a) No silanes present: polyphenylene sulfide (PPS) 38, glass fiber OC497 40, filler 20.75, DHT-4A 1.0, and high density polyethylene (Marlex TR161) 0.25;

(b) Silanes present: polyphenylene sulfide (PPS) 38, glass fiber OC497 40, filler 19.45, DHT-4A 1.0, high density polyethylene (Marlex TR161) 0.25, Silane Y-9194 (a silane I of formula A) 0.5, and UCARSIL TC-100 (a silane II epoxysilane 3-glycidoxypropyltrimethoxysilane) 0.8.

Test specimens for each composition were injection molded and their mechanical properties measured as described in Example I. The results are presented in Table IV.

TABLE IV

EFFECT OF FILLER ON MECHANICAL PROPERTIES OF GLASS-FILLED PPS COMPOSITIONS

| Run | 7 | 8 | 9 | 10 | 11 | 12 | 13 | 14 | 15 | 16 | 17 | 18 | 19 | 20 |
|---|---|---|---|---|---|---|---|---|---|---|---|---|---|---|
| Filler | Calcium Sulfate[a] | | | | $CaCO_3$[b] | | Silica[c] | | Silica[d] | | Talc[e] | | Titania[f] | |
| Silanes[g] | No | Yes | No | Yes | No | Yes | No | Yes | No | Yes | No | Yes | No | Yes |
| Property | | | | | | | | | | | | | | |
| Tensile Strength, kpsi | | | | | | | | | | | | | | |
| Weldline | 5.75 | 9.8 | 7.7 | 9.6 | 8.8 | 8.9 | 7.6 | 9.3 | 7.6 | 9.3 | 6.0 | 5.2 | 6.95 | 10.0 |
| Annealed | 15.3 | 19.5 | 15.8 | -- | 15.3 | 15.7 | 14.6 | 13.6 | 13.2 | 12.6 | 16.6 | 16.4 | 17.5 | 16.9 |
| As Molded | 12.6 | 18.0 | 13.7 | -- | 15.7 | 14.3 | 13.5 | 13.9 | 12.1 | 14.9 | 14.8 | 16.2 | 15.5 | 14.6 |
| Elongation, % (as molded) | 0.6 | 0.9 | -- | -- | -- | -- | -- | -- | -- | 0.69 | -- | -- | -- | -- |
| Flexural Modulus, x $10^6$ psi | 2.1 | 2.2 | 2.0 | 2.2 | 2.0 | 2.2 | 2.1 | 2.1 | 2.1 | -- | 2.1 | 2.2 | 2.2 | 2.1 |
| Flexural Strength, kpsi | 19.2 | 27.4 | 19.3 | 28.9 | 19.3 | 24.6 | 18.7 | 20.7 | 18.6 | -- | 21.8 | 23.1 | 22.7 | 21.0 |
| Impact Resistance, ft-lb/$in^2$ | | | | | | | | | | | | | | |
| Notched Izod | 0.81 | 0.96 | 0.90 | 0.98 | 0.68 | 0.79 | 0.58 | 0.64 | 0.69 | 0.65 | 0.65 | 0.67 | 0.96 | 0.60 |
| Unnotched Izod | 2.9 | 3.7 | 3.4 | 3.9 | 2.2 | 4.2 | 2.9 | 2.8 | 1.9 | 2.6 | 3.7 | 3.6 | 2.7 | 2.7 |
| Melt Flow Rate g/10 min | 56 | 38 | 29 | 19.7 | 35.3 | 51.5 | 21.6 | 47.3 | 22 | 46 | 35.1 | 37 | 28 | 58.1 |

a Calcium Sulfate CA5, U.S. Gypsum Corporation
b Calcium Carbonate, White-(10), Georgia Marble Company, Atlanta, GA
c Fused silica powder, GP-7I, Harbison-Walker Refractories, Pittsburgh, PA.
d Fumed Amorphous Silica, Grade RS-1, Reynolds Metal Company, Little Rock, AR.
e California Talc (non-fibrous), Pfizer Incorporated, New York, NY
f Ti-Pure® Titanium Dioxide, Grade LW, duPont Company, Wilmington, DE.
g 'Yes' indicates the composition contained an organosilane from each of Silane I and Silane II groups.

Comparisons of the mechanical properties of compositions with the various fillers each with and without my inventive combination of two defined differing organosilanes illustrate the effectiveness of the organosilane combination to improve the weldline tensile strength. An increase in the weldline tensile strength is observed for the compositions using the fillers calcium sulfate (Runs 8 vs. 7, 10 vs. 9), silica (Runs 14 vs.

13, 16 vs. 15), and titania (Runs 20 vs. 19). In the presence of the fillers, calcium carbonate and talc, however, the weldline tensile strength was only slightly improved by the presence of the required inventive combination of organosilanes.

EXAMPLE III

In this example the effects of various organosilanes from silane I group in conjunction with organosilanes from silane II group on mechanical properties of compositions containing calcium sulfate as filler is demonstrated.

Each composition contained an organosilane from each of the silane I and silane II groups. The composition of Run 21 contained 0.5 weight percent an aminosilane (Dynasylan 1506, 3-aminopropylmethyl diethoxysilane) and 0.8 weight percent of an epoxysilane (Union Carbide TC 100 3-glycidoxypyltrimethoxysilane). The composition of Run 22 contained 0.5 weight percent of a mercaptosilane (Union Carbide TC-100; see footnote i Table III), and 0.8 weight percent of an epoxysilane (TC100). The composition of Run 23 contained 0.5 weight percent of a polysulfide organosilane (Y-9194, Union Carbide), and 0.8 weight percent of an epoxysilane (Degussa Si 242). The results are reported in Table V.

TABLE V

EFFECT OF ORGANOSILANES ON PHYSICAL PROPERTIES OF GLASS-FILLED PPS COMPOSITIONS

| Run | TC100 Epoxy 21 | TC100 Epoxy 22 | Y194 23 |
|---|---|---|---|
| Silane I | 1506[a] | A-189[c] | Y-9194[d] |
| Silane II | TC100[b] | TC100 | Si 242[e] |
| Property | | | |
| Tensile Strength, kpsi | | | |
| Weldline | 9.5 | 9.3 | 8.0 |
| Annealed | 18.5 | 17.7 | 19.2 |
| As Molded | 17.0 | 16.7 | 18.0 |
| Flexural Modulus, x $10^6$ psi | 2.2 | 2.2 | 2.3 |
| Flexural Strength, kpsi | 26.5 | 25.1 | 25.0 |
| Impact Resistance, ft-lb/$in^2$ | | | |
| Notched Izod | 0.88 | 0.75 | 1.0 |
| Unnotched Izod | 4.0 | 3.4 | 3.8 |
| Melt Flow Rate, g/10 min | 28 | 27 | 34 |
| Ash, weight % | 51 | 56.2 | 47 |

a Aminosilane Dynasylan 1506, Kay-Fries, Inc.
b Union Carbide TC100 3-glycidoxypropyltrimethoxysilane
c Mercaptosilane Silane A-189, Union Carbide Corporation
d Union Carbide Y-9194 polysulfide organosilane
e Epoxysilane Degussa Silane Si242, 2-(3,4-epoxycyclohexyl)ethyltriethoxysilane, Degussa Coporation, Teterboro, NJ.

Comparison of the weldline tensile strength of the compositions of Runs 21 and 22 with those of Runs 8 and 10 demonstrates that the aminosilane 1506 and the mercaptosilane A-189 each are satisfactory substitutes for the polysulfide organosilane. Substitution of the epoxysilane Si242, for the preferred epoxysilane yields a composition Run 23 with an improved weldline tensile strength, as compared to compositions without organosilanes Runs 8 and 10 Table IV.

EXAMPLE IV

Several compositions were prepared to demonstrate the arc resistance of my compositions. The compositions were prepared in general as described above for Example I. Compositions and results are shown in Table VI:

TABLE VI

| Run | 1 | 2 | 3 | 24 | 25 | 26 |
|---|---|---|---|---|---|---|
| PPS | 38[a] | 38[a] | 38[a] | 58.75[h] | 38[i] | 38[j] |
| OC497 Glass(b) | 40 | 40 | 40 | 40 | 40 | 35 |
| $CaSO_4$(c) | 20.75 | 18.45 | 18.75 | --- | 18.75 | 25.25 |
| DHT-4A(d) | 1.0 | 1.0 | 1.0 | --- | 1.0 | --- |
| HDPE(e) | 0.25 | 0.25 | 0.25 | 0.25 | 0.25 | 0.25 |
| N110, Carbon Black (f) | --- | --- | --- | --- | --- | --- |
| SB-4, Carbon Black (g) | --- | --- | 0.7 | --- | --- | --- |
| Y9194 Silane I(h) | --- | 0.5 | 0.5 | --- | 0.8 | 1.0 |
| TC100 Silane II(i) | --- | 0.8 | 0.8 | --- | 0.5 | 0.5 |
| $Li_2CO_3$ | --- | --- | --- | 1.0 | --- | --- |
| Tensile Strength, PSI | | | | | | |
| Weldline | 8050 | 10150 | 9850 | 6000 | 9500 | 5500 |
| Annealed | 10650 | 18650 | 19100 | 20000 | 19000 | 14500 |
| As Molded | 15200 | 19450 | 18250 | --- | --- | --- |
| Elongation, % (as molded) | 0.69 | 0.89 | 0.84 | 0.9 | 0.9 | 0.7 |
| Flexural Modulus, PSI | 2211600 | 2367800 | 2369150 | - | - | - |
| Flexural Strength, PSI | 21700 | 29450 | 29450 | 28000 | 29000 | 23000 |
| Impact Resistance, ft-lb/in$^2$ | | | | | | |
| Notched Izod | 0.88 | 1.0 | 1.0 | | | |
| Unnotched Izod | 3.4 | 4.2 | 3.6 | 1.3 | 1.0 | 1.0 |
| Insulation Resistance, ohms | $1.4 \times 10^{11}$ | $8.7 \times 10^{12}$ | $4.1 \times 10^{13}$ | --- | --- | --- |
| Melt Flow Rate, g/10 min | 39.7 | 22.4 | 25.3 | --- | --- | --- |
| Arc Resistance, sec | 151 | 145 | 150 | 34 | 150 | 170 |
| Arc Track, In/Min | 0 | 0 | 0 | 7.1 | 0 | 0 |

a see Table III
b see Table III
c see Table III
d see Table III
e see Table III
f see Table III
g see Table III
h linear PPS MF 120, cured
i linear PPS MF 140, uncured
j linear PPS MF 700, cured

The data demonstrate the effectiveness of the two organosilanes in maintaining arc resistance in my composition without adverse effects.

## Claims

1. A composition comprising

a) poly(arylene sulfide) resin,
b) glass fibrous reinforcement material,
c) filler; and
d) at least one organosilane selected from the group consisting of aminosilane, mercaptosilane, and polysulfide organosilane, and
e) at least one epoxysilane represented by the formula

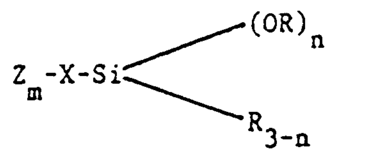

wherein Z is 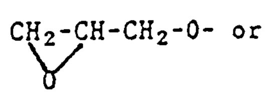 or 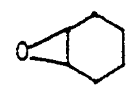

X is hydrocarbon linear or branched alkylene, arylene, or aralkylene radical having 1 to about 15 carbon atoms, R is a hydrocarbon radical having 1 to about 8 carbon atoms, m is an integer of at least 1, and n is an integer of 1 to 3.

**2.** A composition of claim 1 wherein said poly(arylene sulfide) is present in an amount from about 25 to about 60 weight-%, said fibrous reinforcement material is present in an amount from about 0 to about 60 weight-%, said filler is present in an amout from about 5 to about 50 weight-%, polysulfide organosilane in a amount from about 0.25 to about 3 weight-%, and epoxysilane is present in an amount from about 0.25 to about 4 weight-% based on the weight of the total composition.

**3.** A composition of claim 1 wherein the poly(arylene sulfide) is polyphenylene sulfide.

**4.** A composition of claim 1 wherein (e) is selected from the group consisting of:
2-glycidoxypropyltrimethoxysilane
3-glycidoxypropylthmethoxysilane
beta-(3,4-epoxycyclohexyl)-ethyltrimethoxysilane, and
3-glycidoxypropylmethyldiethoxysilane, in particular wherein said epoxysilane is 3-glycidoxypropyltrimethoxysilane.

**5.** A composition of claim 1 wherein said (d) is aminosilane, in particular wherein said (d) is 3-aminopropyl-methyldiethoxysilane.

**6.** A composition of claim 1 wherein said (d) is mercaptosilane in particular wherein said (d) is gamma-mercapto-propyltrimethoxysilane.

**7.** A composition of claim 1 wherein said (d) is polysulfide organosilane, in particular wherein said (d) is polysulfide organosilane within the formula:

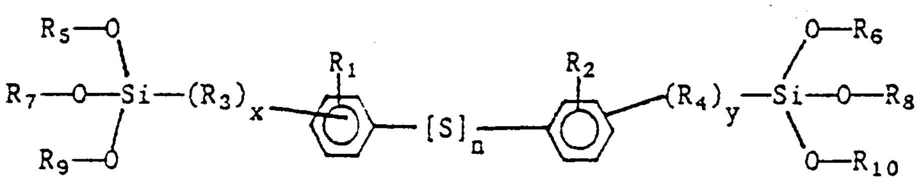

wherein n is an integer of 1 to 30; each of $R_1$ and $R_2$ is H or an alkyl group having 1 to 30 atoms; each $R_5$, $R_6$, $R_7$, $R_8$, $R_9$ and $R_{10}$ is an alkyl group having 1 to 30 carbon atoms; x is 0 or 1; y is 0 or 1; and each of $R_3$ and $R_4$ is an alkylene group having 1 to 30 carbon atoms.

8. The composition of claim 7 wherein said (a) is poly(phenylene sulfide); wherein in said (d) each of $R_1$ and $R_2$ is $-CH_3$; each of $R_5$, $R_6$, $R_7$, $R_8$, $R_9$, and $R_{10}$ is $-CH_2CH_3$; x = 1; y = 1; and each of $R_3$ and $R_4$ is $-CH_2CH_2-$, in particular wherein said (d) is a plurality of silanes within said formula; and wherein the average value of n for said plurality of silanes is about 2 to about 4, more particularly wherein said average value for n is about 2.8.

9. A composition of claim 1 wherein said (c) is selected from the group consisting of calcium sulfate, titania and silica, in particular wherein said (c) is calcium sulfate.

10. A composition consisting essentially of
   a) poly(arylene sulfide), in particular polyphenylene sulfide resin having a melt flow less than about 800,
   b) glass reinforcement,
   c) filler,
   d) at least one organosilane selected from the group consisting of aminosilane, mercaptosilane, and polysulfide organosilane, and
   e) at least one epoxysilane selected from the group consisting of:
   2-glycidoxypropyltrimethoxysilane,
   3-glycidoxypropyltrimethoxysilane,
   beta-(3,4-epoxycyclohexyl)-ethyltrimethoxysilane, and
   3-glycidoxypropylmethyldiethoxysilane, in particular wherein the epoxysilane is 3-glycidoxypropyltrimethoxysilane.

11. A composition of claim 10 wherein poly(arylene sulfide) is present in an amount from about 25 to about 60 weight-%, fibrous reinforcement material in an amount from about 0 to about 60 weight-%, filler in an amount from about 5 to about 50 weight-%, polysulfide organosilane in an amount from about 0.25 to about 3 weight-%, and epoxysilane in an amount from about 0.25 to about 4 weight-%, based on the weight of the total composition.

12. A composition comprising poly(arylene sulfide), fibrous reinforcement material, filler, at least one epoxysilane, and at least one organosilane selected from the group consisting of aminosilane, mercaptosilane, and polysulfide organosilane, wherein the organosilanes are present in sufficient amounts to enhance weldline tensile strength of the composition as compared to compositions absent the combination of organosilanes.

13. A process for improving the weldline strength of glass-filled poly(arylene sulfide) comprising: mixing poly(arylene sulfide), glass, filler, at least one epoxysilane, and at least one organosilane selected from the group consisting of aminosilane, mercaptosilane, and polysulfide organosilane, to form a homogeneous mixture, having about 25 to about 60 weight-% poly(arylene sulfide) resin, about 0 to about 60 weight-% glass, about 5 to about 50 weight-% filler, about 0.25 to about 3 weight-% epoxysilane, and about 0.25 to about 4 weight-% of at least one organosilane selected from the group consisting of aminosilane, mercaptosilane, and polysulfide organosilane, each based on the total weight of the mixture; extrusion compounding said homogeneous mixture at a temperature above the melting point of poly(arylene sulfide) to produce a uniform composition.

14. A process for improving the weldline strength of glass-filled poly(arylene sulfide) compositions comprising: premixing glass and/or filler, at least one epoxysilane and at least one organosilane selected from the group consisting of aminosilane, mercaptosilane, and polysulfide organosilane, adding poly(arylene sulfide) to form a homogeneous mixture having about 25 to about 60 weight-% poly(arylene sulfide) resin, about 0 to about 60 weight-% glass, about 5 to about 50 weight-% filler, about 0.25 to about 3 weight-% epoxysilane, and about 0.25 to about 4 weight-% of at least one organosilane selected from the group consisting of aminosilane, mercaptosilane and polysulfide organosilane based on the total weight of the homogenous mixture; extrusion compounding said homogenous mixture at a temperature above the melting point of poly(arylene sulfide) to produce a uniform composition.

15. A shaped form made by the process of claim 13 or 14.

European Patent Office

# EUROPEAN SEARCH REPORT

Application Number

EP 90 12 1585

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | US-A-4703074 (H.IZUTSU ET AL)<br>*Tables 1,2; Claims 1-9*<br>--- | 1-4 | C08L81/02<br>C08K13/04<br>C08K5/54<br>C08K3/00<br>C08K7/14<br>//(C08K13/04,<br>5:54,5:54,<br>3:00,7:14) |
| Y | EP-A-62806 (PHILLIPS PETROLEUM COMPANY)<br>*Tables 1,2; page 2, line 24-36*<br>----- | 1-4 | |
| | | | TECHNICAL FIELDS SEARCHED (Int. Cl.5 ) |
| | | | C08K<br>C08L |

The present search report has been drawn up for all claims

| Place of search | Date of completion of the search | Examiner |
|---|---|---|
| THE HAGUE | 28 JANUARY 1991 | WILSON A.J.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document